# EUROPÄISCHE PATENTSCHRIFT

(11) **EP 1 002 376 B1**
(45) Veröffentlichungstag und Bekanntmachung des Hinweises auf die Patenterteilung: **31.10.2001**
(21) Anmeldenummer: 97938770.1
(22) Anmeldetag: 14.08.1997
(51) Int. Cl.: H04B 1/713

(54) **VERFAHREN UND ANORDNUNG ZUR REGISTRIERUNG EINES MOBILTEILS AN EINER FESTSTATION**
METHOD AND DEVICE FOR REGISTERING A MOBILE TELEPHONE IN A FIXED STATION
PROCEDE ET DISPOSITIF POUR L'ENREGISTREMENT D'UNE PARTIE MOBILE DANS UNE STATION FIXE

(43) Veröffentlichungstag der Anmeldung: 24.05.2000
(73) Patentinhaber: SIEMENS AKTIENGESELLSCHAFT, 80333 München (DE)
(72) Erfinder: KOCKMANN, Jürgen, D-48599 Gronau (DE); SYDON, Uwe, D-40489 Düsseldorf (DE)
(86) Internationale Anmeldenummer: DE9701750
(87) Internationale Veröffentlichungsnummer: WO9909672

(56) Entgegenhaltungen:
- EP-A- 0 650 304
- EP-A- 0 767 551
- WO-A-95/06377
- DE-A- 3 415 032
- US-A- 5 515 369

## Beschreibung

Die vorliegende Erfindung bezieht sich auf eine Anordnung und ein Verfahren zur Registrierung eines Mobilteils an einer Feststation für eine Funkübertragung von Daten, bei der die Daten in Zeitschlitzen auf mehreren Trägerfrequenzen übertragen werden und die Trägerfrequenz von einem Zeitschlitz zum nächsten gemäß einer vorbestimmten Sequenz gewechselt wird.

Bei der Mehrzahl der zur Zeit auf dem Markt erhältlichen schnurlosen Telefone ist es möglich, mehr als ein Mobilteil von einer Feststation aus zu bedienen. Oft wird ein schnurloses Telefonsystem dadurch nachgerüstet, daß ein weiteres Mobilteil zu dem oder den bereits vorhandenen Mobilteilen hinzugefügt werden soll. Dazu muß das neue Mobilteil in das bereits vorhandene schnurlose Telefonsystem, d.h. insbesondere an der Feststation registriert werden. Unter Registrierung ist also im Sinne der vorliegenden Beschreibung zu verstehen, daß ein, insbesondere ein weiteres Mobilteil im Sinne einer Anmeldung an der Feststation registriert wird, so daß es nach erfolgter Registrierung insbesondere Sprachinformationsdaten zu der Feststation senden bzw. von der Feststation empfangen kann.

Probleme bereitet es, wenn als Luftschnittstelle ein sogenanntes Frequency Hopping Spread Spectrum (Frequenzsprung-Streuspektrum)-System verwendet wird und ein, insbesondere ein weiteres Mobilteil in ein solches System eingebunden werden soll. Unter einem Frequency Hopping Spread Spectrum-System ist dabei ein System zu verstehen, bei dem zur Funkübertragung von Daten eine Vielzahl an Trägerfrequenzen bereitsteht und die verwendete Trägerfrequenz von Zeit zu Zeit, beispielsweise nach jedem Zeitschlitz oder Rahmen der Übertragung gewechselt wird. Insbesondere bei einem Zeitmultiplex (TDMA)-System kann ein Wechsel der Trägerfrequenz nach jedem Zeitschlitz oder Zeitrahmen der Zeitmultiplex-Übertragung erfolgen. Ein solches Frequency Hopping Spread Spectrum-System hat Vorteile dahingehend, daß die Energie der gesamten Funkübertragung über sämtliche Trägerfrequenzen verteilt ist und somit eine einzelne Trägerfrequenz weniger belastet wird. Dies ist insbesondere von Bedeutung, wenn ein allgemein verfügbares Frequenzband, wie beispielsweise das 2,4 GHz-ISM (Industrial Scientific Medical)-Band verwendet wird, bei dem eine Obergrenze für die maximal pro Trägerfrequenz auftretende Energie vorgeschrieben ist, um eine Störung anderer Teilnehmer so gering wie möglich zu halten.

Als weiterer Vorteil des Frequency Hopping Spread Spectrum-Systems ist zu nennen, daß durch das Bereitstellen einer großen Anzahl von Trägerfrequenzen das System unempfindlicher gegen Störungen wird. Darüber hinaus erhöht sich die Abhörsicherheit des Systems gegenüber Dritten, da der Dritte in der Regel nicht weiß, auf welche Trägerfrequenz nach einem gewissen Zeitraum gewechselt wird.

Auch wenn ein Frequency Hopping Spread Spectrum-System die oben genannten Vorteile aufweist, so besteht doch das Problem der Synchronisierung der Trägerfrequenzen und insbesondere des Wechsels der Trägerfrequenzen bei der Registrierung eines neuen Mobilteils an einer Feststation. Für eine Registrierung ist es nämlich Voraussetzung, daß das zu registrierende Mobilteil mit der Feststation kommunikationsfähig ist, d.h. die Trägerfrequenzwechsel genau nachvollziehen kann.

Aus der WO 95/06377 ist ein Verfahren und eine Anordnung zur drahtlosen Übertragung von Daten zwischen einem Mobilteil und einer Feststation in Zeitschlitzen auf mehreren Trägerfrequenzen bekannt, bei dem bzw. bei der die Trägerfrequenzen einer vorbestimmten Zeitdauer gemäß einer vorbestimmten Sequenz gewechselt wird. Das Mobilteil und die Feststation weisen hierzu jeweils eine Einrichtung zur Ausgabe der vorbestimmten Sequenz und ein HF-Modul zur Übertragung der Daten in den Zeitschlitzen auf.

Es ist dabei Aufgabe der vorliegenden Erfindung, ein Verfahren sowie eine Anordnung zur Registrierung eines Mobilteils an einer Feststation zu schaffen, die eine Registrierung eines Mobilteils an einer Feststation für ein Datenübertragungssystem ermöglichen, bei der Daten in Zeitschlitzen auf mehreren Trägerfrequenzen übertragen werden und die Trägerfrequenz von einem Zeitschlitz zum nächsten gewechselt wird.

Diese Aufgabe wird erfindungsgemäß durch ein Verfahren zur Registrierung eines Mobilteils an einer Feststation für eine Funkübertragung von Daten gelöst, bei der die Daten in Zeitschlitzen auf mehreren Trägerfrequenzen übertragen werden (TDMA-System) und die Trägerfrequenz beispielsweise von einem Zeitschlitz zum nächsten Zeitschlitz gemäß einer vorbestimmten Sequenz gewechselt wird. Erfindungsgemäß werden von der Feststation Kontrolldaten ausgesendet, die die Position der Trägerfrequenz des aktuellen (momentan ausgesendeten) Zeitschlitzes in der vorbestimmten Sequenz anzeigen. Das Mobilteil kann dann die Position der Trägerfrequenz des aktuellen Zeitschlitzes in der vorbestimmten Sequenz anhand der Kontrolldaten bestimmen. Das Mobilteil, dem ja die Sequenz insgesamt bekannt ist, kann dann ausgehend von der Position der Trägerfrequenz in der vorbestimmten Sequenz die Trägerfrequenz ermitteln, auf die als nächstes gewechselt wird, wodurch eine Synchronisierung des Wechsels der Trägerfrequenz des Mobilteils mit dem der Feststation geschaffen wird.

Die Kontrolldaten können insbesondere nur während eines Registriermodus übertragen werden. Nach Beendigung des Registriermodus kann dann eine normale Übertragung von beispielsweise Sprachinformationsdaten zwischen dem Mobilteil und der Feststation erfolgen.

Der Trägerfrequenzwechsel kann anhand einer ausgewählten von mehreren vorbestimmten Sequenzen ausgeführt werden. Die Kontrolldaten können dann über die Position der Trägerfrequenz des aktuellen Zeitschlitzes in der vorbestimmten Sequenz hinaus anzeigen, welche der mehreren vorbestimmten Sequenzen ausgewählt und verwendet wird.

Die vorbestimmten Sequenzen können insbesondere durch einen Algorithmus (Hop-Algorithmus) ermittelt werden.

Es kann eine Erfassung ausgeführt werden, welche der mehreren Trägerfrequenzen gestört ist. Während der Registrierung des Mobilteils an der Feststation wird dann eine durch die vorbestimmte Sequenz vorgeschriebenen Trägerfrequenz auch verwendet, wenn diese Trägerfrequenz als gestört erfaßt wurde. Nach Abschluß der Registrierung wird dann bei der normalen Übertragung von Daten die gestörte Trägerfrequenz der vorbestimmten Sequenz übergangen. Somit wird sichergestellt, daß während des Registriermodus streng der durch die vorbestimmte Sequenz vorgeschriebene Trägerfrequenzwechsel ausgeführt wird, um sicherzustellen, daß das Mobilteil an der Feststation im Sinne einer Registrierung frequenzsynchronisiert wird.

Zur Übertragung kann insbesondere das sogenannte 2,4 GHz-ISM-Frequenzband verwendet werden.

Die Zahl der zur Verfügung stehenden Trägerfrequenzen kann mindestens 75 und insbesondere 96 betragen.

Erfindungsgemäß ist weiterhin eine Anordnung zur drahtlosen Übertragung von Daten zwischen einem Mobilteil und einer Feststation vorgesehen. Die Feststation weist dabei ein HF-Modul zur Übertragung der Daten in Zeitschlitzen auf mehreren Trägerfrequenzen im Sinne eines Zeitmultiplexsystems auf. Eine Einrichtung speichert eine vorbestimmte Sequenz zur Festlegung eines Wechsels der Trägerfrequenz beispielsweise von einem Zeitschlitz zum nächsten und gibt diese vorbestimmte Sequenz an das HF-Modul aus. Die von der Feststation ausgesendeten Daten weisen Kontrolldaten auf, die die Position der Trägerfrequenz des aktuellen Zeitschlitzes in der vorbestimmten Sequenz anzeigen. Das Mobilteil weist eine Einrichtung zur Bestimmung der Position der Trägerfrequenz des aktuellen Zeitschlitzes in der vorbestimmten Sequenz anhand der Kontrolldaten auf.

Als Alternative kann das Kontrollsignal auch angeben, welche die von der Basisstation als nächstes "angesprungene" Trägerfrequenz ist.

Als weitere Alternative können die Kontrolldaten angeben, welche Trägerfrequenz die Basisstation in dem m-ten Zeitschlitz oder m-ten Rahmen verwenden wird. Dies vorteilhaft, wenn sich ein Mobilteil in dem sogenannten Idle-Locked- oder Multiframe-Modus befindet. In einem solchen Modus synchronisiert sich ein Mobilteil nur in jedem m-ten Zeitschlitz oder Rahmen auf die Basisstation nach, wenn es keine aktive Sprachkommunikation mit der Basisstation betreibt.

Die Kontrolldaten müssen nicht in jedem Zeitschlitz oder Rahmen ausgesendet werden. Wenn ein Mobilteil, das sich auf eine Basisstation synchronisieren möchte, eine Zeitschlitz oder Rahmen empfängt, in dem keine Kontrolldaten enthalten ist, tastet (scant) es neuerlich alle Trägerfrequenzen ab, wobei sich dieser Vorgang wiederholt, bis das Mobilteil einen Zeitschlitz oder Rahmen von der Basisstation empfängt, der Kontrolldaten enthält.

Die Feststation kann eine Schaltvorrichtung zum Umschalten zwischen einem Registriermodus, in dem ein bzw. ein weiteres Mobilteil an der Feststation registriert werden kann, und einem Normal-Übertragungsmodus zur normalen Übertragung von Informationsdaten aufweisen. Die Kontrolldacen werden automatisch nur ausgesendet, wenn die Schaltvorrichtung auf den Registriermodus geschaltet ist.

Im Normal-Übertragungsmodus werden die Kontrolldaten nicht bzw. nur auf Anfrage ausgesendet.

In der Ausgabeeinrichtung können mehrere vorbestimmte Sequenzen vorgesehen sein. Die Kontrolldaten weisen dann über die Positionsdaten hinaus Daten auf, die die gerade verwendete Sequenz anzeigen.

Die Ausgabeeinrichtung kann einen Prozessor aufweisen, der die vorbestimmte Sequenz anhand eines Algorithmus berechnet.

Die Erfindung wird nun anhand eines Ausführungsbeispiels und bezugnehmend auf die begleitenden Figuren näher erläutert. Es zeigen:
Fig. 1 eine erfindungsgemäße Anordnung zur drahtlosen Übertragung von Daten,
Fig. 2 einen Zeitrahmen eines Datenübertragungsstandards, wie er bei der vorliegenden Erfindung anwendbar ist,
Fig. 3 eine detaillierte Darstellung eines erfindungsgemäßen Zeitrahmens für eine Trägerfrequenz, und
Fig. 4 eine schematische Darstellung eines Frequency Hopping Spread Spectrum-Systems.

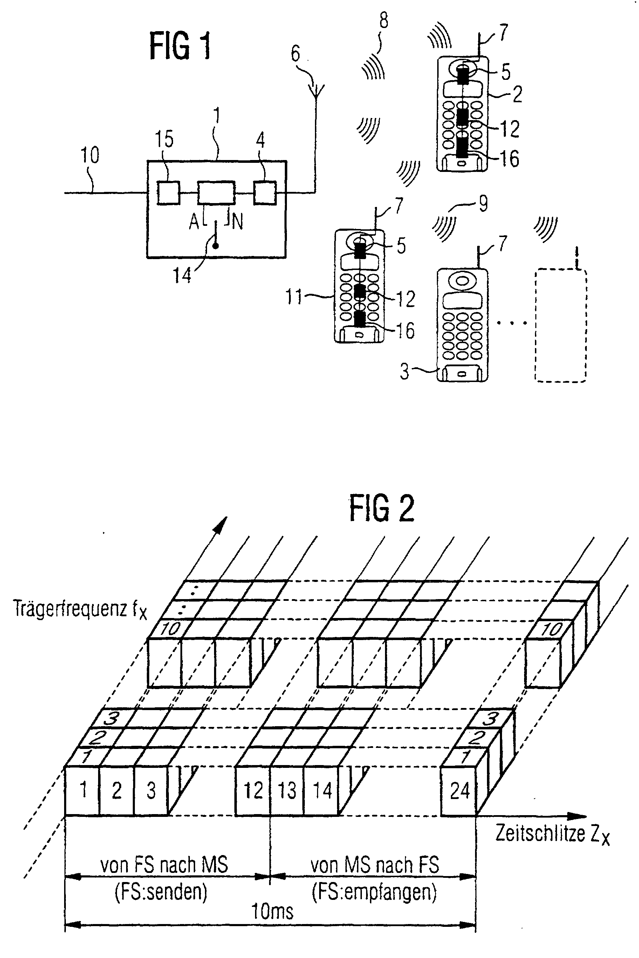

Bezugnehmend auf Fig. 1 soll zuerst der allgemeine Aufbau der erfindungsgemäßen Anordnung zur Funkübertragung erläutert werden. Wie allgemein üblich weist die Anordnung zur Funkübertragung von Daten eine Feststation 1 und mehrere Mobilteile (Mobilstationen, kabellose Telefone) 2, 3, 11 auf. Die Feststation 1 ist dabei mit einer Endstellenleitung 10 mit dem Festnetz verbunden. Die Feststation 1 weist eine Antenne 6 auf, mittels der beispielsweise über einen Funkübertragungsweg 8 mit dem Mobilteil 2 oder über einen Funkübertragungsweg 9 mit dem Mobilteil 3 kommunizieren. Die Mobilteile 2, 3, 11 weisen zum Empfang bzw. zum Senden von Daten jeweils eine Antenne 7 auf.

Nunmehr soll der innere Aufbau einer Feststation 1 näher erläutert werden, soweit er für die vorliegende Erfindung Bedeutung hat. In der Feststation 1 ist ein Prozessor 15 vorgesehen, der anhand eines vorgegebenen Algorithmus (Hop-Algorithmus) eine vorbestimmte Sequenz ermittelt. Alternativ können in dem Prozessor 15 mehrere verschiedene Algorithmen vorgesehen sein, so daß der Prozessor 15 entsprechend dem jeweils verwendeten Algorithmus unterschiedliche Sequenzen ermitteln kann. Die durch den Prozessor 15 ermittelten Sequenzen werden dann zu einer Speicher- und Ausgabeeinrichtung 13 gegeben. Die Speicher- und Ausgabeeinrichtung 13 gibt entweder die durch den Prozessor 15 laufend ermittelte Sequenz oder eine in ihr zuvor fest abgespeicherte Sequenz zu einem HF-Modul 4.

Das HF-Modul 4 empfängt und sendet Daten auf einer Trägerfrequenz fₓ, die durch den aktuellen Wert der von der Speicher- und Ausgabeeinrichtung 13 her übermittelten Sequenz abhängt. Es findet also somit eine Funkübertragung auf eine Trägerfrequenz fₓ statt, wobei die aktuell verwendete Trägerfrequenz entweder mittelbar durch den Prozessor 15 anhand eines Algorithmus bestimmt wird oder alternativ unmittelbar aus dem Wert einer fest in der Speicher- und Ausgabeeinrichtung 13 gespeicherten Sequenz bestimmt wird.

Nunmehr soll der innere Aufbau eines Mobilfunkteils näher beschrieben werden, soweit der für die vorliegende Erfindung Relevanz hat. Der Aufbau eines Mobilfunkteils 2, 3, 11 ist dabei im wesentlichen symmetrisch zu dem oben beschriebenen inneren Aufbau der Feststation 1. Das heißt, jedes Mobilfunkteil 2, 3, 11 weist, wie es in der Erfindung nur für die Mobilfunkteile 2 und 11 dargestellt ist, einen Prozessor 16 auf. Dieser Prozessor 16 ermittelt anhand eines oder alternativ anhand mehrerer zur Verfügung stehenden Hop-Algorithmen eine Sequenz, die er zu einer Speicher- und einer Ausgabeeinrichtung 12 gibt. Die Speicher- und Ausgabeeinrichtung 12 gibt entweder die von dem Prozessor 16 laufend ermittelten Werte der auf dem Algorithmus basierenden Sequenz oder alternativ Werte einer fest in ihr eingespeicherten Sequenz an ein HF-Modul 5 auf. Das HF-Modul 5 sendet oder empfängt Daten auf einer Trägerfrequenz fₓ, deren Höhe von dem ihr von der Speicher- und Ausgabeeinrichtung 12 übermittelten Wert der Sequenz abhängt. Ein Mobilteil 2, 3, 11 empfängt oder sendet also Daten auf einer Trägerfrequenz fₓ, deren Höhe entweder von dem aktuellen Wert der von dem Prozessor 16 ermittelten Sequenz oder von dem Wert einer fest in der Speicher- und Ausgabeeinrichtung 12 eingespeicherten Sequenz abhängt.

Dabei ist zu beachten, daß der Prozessor 15 in der Feststation 1 und die Prozessoren 16 in den Mobilteilen 2, 3, 11 denselben Algorithmus bei der Sequenzermittlung zugrunde legen, oder für den Fall, daß mehrere Algorithmen zur Verfügung stehen, die gleiche Auswahl an Algorithmen aufweisen. Für den Fall, daß die Sequenz nicht laufend von dem Prozessor 15, 16 ermittelt wird, sondern fest in den Speicher- und Ausgabeeinrichtungen 12, 13 vorgegeben wird, sind natürlich die Sequenz, die in der Speicher- und Ausgabeeinrichtung 13 der Feststation 1 eingespeichert ist identisch zu den Sequenzen, die jeweils in den Speicher- und Ausgabeeinrichtungen 12 der Mobilteile 2, 3, 11 eingespeichert sind.

Bezugnehmend auf Fig. 2 soll nunmehr ein Übertragungsstandard, wie er bei der vorliegenden Erfindung Verwendung findet, erläutert werden. Wie in Fig. 2 ersichtlich werden auf mehreren Trägerfrequenzen fₓ, von denen zehn dargestellt sind, zeitlich nacheinander Daten in mehreren Zeitschlitzen, im dargestellten Fall 24 Zeitschlitze Zx, im Zeitmultiplex-Verfahren TDMA (Time Division Multiple Access) übertragen. Im dargestellten Fall auf den Trägerfrequenzen wird dabei im Wechselbetrieb (duplex) gearbeitet. Das heißt, nachdem die Basisstation die ersten zwölf Zeitschlitze Zx gesendet hat, schaltet sie auf Empfang, und sie empfängt in der Gegenrichtung die zweiten zwölf Zeitschlitze (13 - 24).

Für den Fall, daß der sogenannte DECT-Standard zur Übertragung verwendet wird, beträgt die zeitliche Dauer eines Zeitrahmens 10 Millisekunden und es sind 24 Zeitschlitze Zx vorgesehen, nämlich 12 Zeitschlitze für die Übertragung von der Feststation zu Mobilteilen und weitere 12 Zeitschlitze Zx zur Übertragung von den Mobilteilen zu der Feststation. Im DECT-Standard sind 10 Trägerfrequenzen fₓ zwischen 1,88 GHz und 1,90 GHz vorgesehen.

Die vorliegende Erfindung findet aber insbesondere auch Anwendung für Übertragungen im sogenannten 2,4 GHz-ISM (Industrial Scientific Medical)-Frequenzband. Das ISM-Frequenzband weist eine Bandbreite von 83,5 MHz auf. Über diese 83,5 MHz müssen gemäß der Vorschrift "FCC part 15" (Federal Communications Commission) mindestens 75 Trägerfrequenzen verteilt sein. Besonders vorteilhaft ist eine Aufteilung der Bandbreite von 83,5 MHz auf 96 Trägerfrequenzen, d.h. ein Kanalabstand von 864 kHz.

Die oben genannten Frequenzbänder und Standards sind rein als Beispiel genannt. Grundsätzliche Voraussetzung für die Erfindung ist es lediglich, daß ein sogenanntes Frequency Hopping Spread Spectrum verwendet wird, d.h. daß mehrere Trägerfrequenzen zur Verfügung stehen, und daß die zur Übertragung gewählte Trägerfrequenz fₓ von Zeit zu Zeit gewechselt wird. Für einen solchen Wechsel ist Voraussetzung, daß die Daten in Zeitschlitzen Zx übertragen werden (Zeit-Multiplex-Verfahren) Geeignet ist also der sogenannte DECT-Standard sowie jeder andere abgewandelte und auf diesem DECT-Standard basierende Standard. Eine Abwandlung kann dabei bspw. durch eine Verringerung (Halbierung) der Zeitschlitzanzahl pro Rahmen sein, wodurch die Bitrate und somit die benötigte Basisbandbreite der Übertragung verringert (halbiert) werden kann.

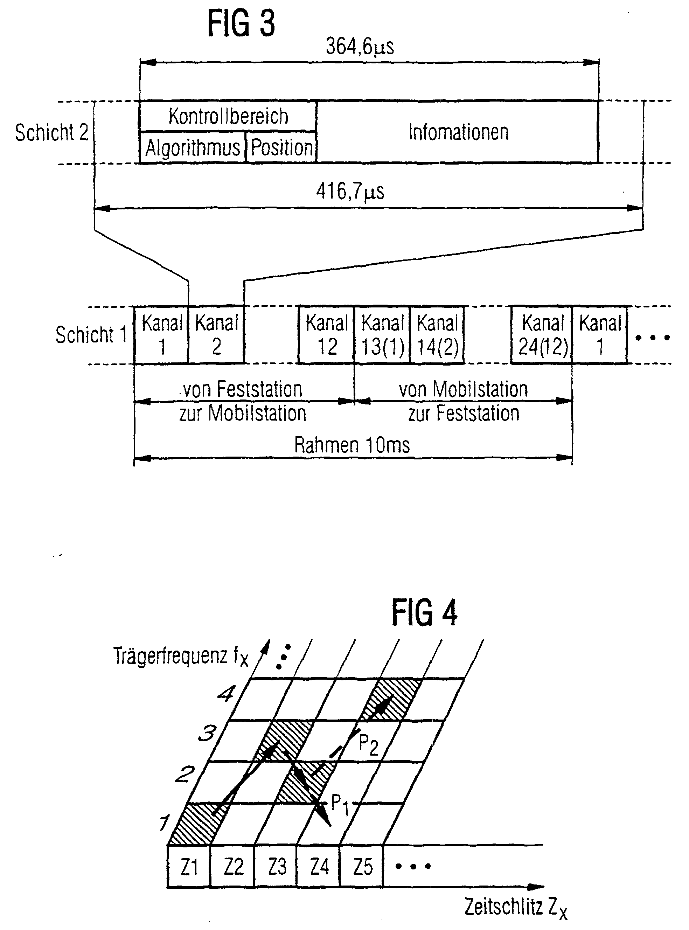

Bezugnehmend auf Fig. 4 soll nun erläutert werden, wie die Wahl einer Trägerfrequenz fₓ für einen bestimmten Zeitschlitz Zx ausgeführt wird. Es sei angenommen, daß der Prozessor 15 der Feststation 1 zum Zeitpunkt des Zeitschlitzes Z1 aufgrund eines Algorithmus einen Wert ermittelt, den das HF-Modul 4 der Feststation 1 mittelbar in eine Trägerfrequenz f₁ umsetzt. In Fig. 4 ist schraffiert dargestellt, daß zum Zeitpunkt des Zeitschlitzes Z1 die Trägerfrequenz f₁ gewählt ist. Beim Übergang vom Zeitschlitz Z1 zu dem folgenden Zeitschlitz Z2 kommt es zwangsweise zu einem Wechsel der Trägerfrequenz fₓ. Wie durch einen Pfeil in Fig. 4 dargestellt kann beispielsweise der Prozessor 15 der Feststation 1 durch seinen Algorithmus einen Wert ermitteln, der von dem HF-Modul 4 in eine Trägerfrequenz f₃ umgesetzt wird. In gleicher Weise kann dann für den Zeitschlitz Z3 eine Trägerfrequenz f₂ gewählt werden, was schraffiert bzw. durch einen Pfeil dargestellt ist.

Im vorliegenden Beispiel wurde der Fall erläutert, daß ein Wechsel der Trägerfrequenz jeweils nach einem Zeitschlitz erfolgt. Für die Erfindung ist es indessen lediglich von Bedeutung, daß der Wechsel der Trägerfrequenz jeweils nach einer vorbestimmten Zeitdauer erfolgt. Diese kann bspw. auch ein Rahmen sein.

Die Feststation 1 führt also basierend auf der von dem Prozessor 15 ermittelten Sequenz einen Wechsel der Trägerfrequenz fₓ von der Trägerfrequenz f₁ auf die Trägerfrequenz f₃ und dann auf die Trägerfrequenz f₂ aus. Wenn nun eine Kommunikation zwischen der Feststation 1 und einem Mobilteil 11 stattfinden soll, muß sichergestellt sein, daß das Mobilteil 11 die Abfolge der von der Feststation 1 durchgeführten Wechsel der Trägerfrequenz fₓ synchron nachvollziehen kann. Dies ist insbesondere ein Problem, wenn ein Mobilteil 11 erstmalig in ein Funkübertragungssystem eingebunden werden soll, d.h. an der Feststation 1 registriert und angemeldet werden muß. Beim unsynchronisierten Betrieb des neuen Mobilteils 11 nach seinem Einschalten wird das Mobilteil 11 einen Wechsel der verwendeten Trägerfrequenzen fₓ ausführen, wie es seine Sequenz vorschreibt. Die Sequenz als solche ist dabei identisch mit der in der Feststation 1 vorgegebenen Sequenz 1, die weiter oben erläutert ist. Indessen ist nicht gesichert, daß die Sequenz des Mobilteils 11 nach seinem Einschalten mit der Sequenz der Feststation 1 zeitlich synchronisiert ist.

In Fig. 3 ist dargestellt, wie erfindungsgemäß sichergestellt wird, daß das neue Mobilteil 11 mit der Feststation 1 synchrone Trägerfrequenzwechsel ausführt. Wie in Fig. 3 ersichtlich, sind die in einem Zeitschlitz (Kanal) Zx übertragenen Daten zum Großteil Informationsdaten, d.h. beispielsweise Daten die eine Sprachinformation eines Telefongesprächs wiedergeben. Vor dem Bereich der Informationsdaten befindet sich nun ein Kontrollbereich, der beim DECT-Standard A-Feld genannt wird. In diesem Kontrollbereich sind Daten zur Synchronisierung des Betriebs eines zu registrierenden Mobilteils 11 mit dem der Feststation 1 vorgesehen. Falls dem Prozessor 15 in der Feststation 1 zur Ermittlung der Sequenz, die mittelbar die Wechsel der Trägerfrequenz fₓ der Feststation 1 vorgibt, mehrere Algorithmen zur Verfügung stehen, enthält der Kontrollbereich Daten, die den gerade verwendeten Algorithmus identifizieren. Als weitere Daten zur Synchronisierung enthält der Kontrollbereich Daten, die anzeigen, welche Position in der vorbestimmten Sequenz die für den aktuellen Zeitschlitz 2x verwendete Trägerfrequenz fₓ entspricht. Die in Fig. 3 dargestellten Daten des Kontrollbereichs, nämlich Daten, die den verwendeten Algorithmus bezeichnen sowie Daten, die die aktuelle Position der Sequenz des aktuellen Algorithmus bezeichnen, werden von der Feststation 1 zu dem Mobilteil 11 ausgesendet.

Als Alternative kann das Kontrollsignal auch angeben, welche die von der Basisstation als nächstes "angesprungene" Trägerfrequenz ist.

Als weitere Alternative können die Kontrolldaten angeben, welche Trägerfrequenz die Basisstation in dem m-ten Zeitschlitz oder m-ten Rahmen verwenden wird. Dies vorteilhaft, wenn sich ein Mobilteil in dem sogenannten Idle-Locked- oder Multiframe-Modus befindet. In einem solchen Modus synchronisiert sich ein Mobilteil nur in jedem m-ten Zeitschlitz oder Rahmen auf die Basisstation nach, wenn es keine aktive Sprachkommunikation mit der Basisstation betreibt.

Die Kontrolldaten müssen nicht in jedem Zeitschlitz oder Rahmen ausgesendet werden. Wenn ein Mobilteil, das sich auf eine Basisstation synchronisieren möchte, eine Zeitschlitz oder Rahmen empfängt, in dem keine Kontrolldaten enthalten ist, scant es neuerlich alle Trägerfrequenzen ab, wobei sich dieser Vorgang wiederholt, bis das Mobilteil einen Zeitschlitz oder Rahmen von der Basisstation empfängt, der Kontrolldaten enthält.

Nach seinem Einschalten scant das Mobilteil 11 so lange den zur Verfügung stehenden Bereich an Trägerfrequenzen fₓ ab, bis es die gerade von der Feststation 1 verwendete Trägerfrequenz fₓ erfaßt. Bei dieser Erfassung der gerade verwendeten Trägerfrequenz fₓ erfaßt das Mobilteil 11 auch die Daten des Kontrollbereichs der von der Feststation 1 ausgesendeten Daten. Zuerst kann daher das Mobilteil 11 bestimmen, welcher Algorithmus aktuell durch den Prozessor 15 in der Feststation 1 verwendet wird, der ja mittelbar den Wechsel der Trägerfrequenzen fₓ der Feststation 1 vorgibt.

Weiterhin kann das Mobilteil 11 aus den Positionsdaten des Kontrollbereichs erfassen, welche Position in der vorbestimmten Frequenz der ausgesendeten Trägerfrequenz entspricht. Das Mobilteil 11 ist nun also in Kenntnis des verwendeten Algorithmus sowie der Position in der Sequenz. Das Mobilteil 11 kann nun also anhand der hier bekannten Position in der Sequenz sowie der in ihr abgespeicherten Sequenz von sich aus feststellen, welche Trägerfrequenz fₓ von der Feststation 1 in dem folgenden Zeitschlitz Zₓ verwendet werden wird. Aus den ihr zugeführten Informationen kann also das Mobilteil 11 Informationen für die in den folgenden Zeitschlitzen Zₓ zu verwendenden Trägerfrequenzen erzeugen. Somit ist eine Kommunikation mit der Feststation 1 möglich, wie es für eine Anmeldeprozedur oder eine Registrierung nötig ist. Durch die zugeführten Informationen über die zukünftigen Trägerfrequenzwechsel ist also das Mobilteil 11 nun mit der Feststation 1 synchronisiert.

Die Feststation 1 kann eine Schaltvorrichtung 14 aufweisen, die zwischen zwei Stellungen umschaltbar ist, nämlich einer Stellung in den Registriermodus R und eine Stellung entsprechend dem Normal-Übertragungsmodus. Nur wenn die Schaltvorrichtung 14 auf Registriermodus R geschaltet ist, sendet die Feststation 1 automatisch die zur Synchronisierung mit einem neu zu registrierenden Mobilteil notwendigen Daten des Kontrollbereichs, nämlich die Informationen hinsichtlich des verwendeten Algorithmus sowie die Informationen hinsichtlich der Position in der vorbestimmten Frequenz basierend auf dem Algorithmus aus. Wenn die Schaltvorrichtung 14 auf den Normal-Übertragungsmodus N geschaltet ist, werden die genannten Synchronisierungsdaten normalerweise nicht, d.h. nur auf Anfrage eines Mobilteils hin ausgesendet.

Ein Problem bei der Registrierung eines weiteren Mobilteils 11 kann sich durch einen sogenannten Störer-Ausweichmodus ergeben. Zuerst soll nun erläutert werden, was gemäß diesem Störer-Ausweichmodus hinsichtlich der Trägerfrequenzwahl von der Feststation 1 ausgeführt wird. Bezugnehmend auf Fig. 4 ist ersichtlich, daß zum Zeitpunkt des Zeitschlitzes Z3 die Trägerfrequenz f₂ durch die vorbestimmte Frequenz angewiesen ist. Es sei nun angenommen, daß die vorbestimmte Sequenz für den Zeitpunkt des Zeitschlitzes Z4 einen Wechsel auf die Trägerfrequenz f₄ anweist. Weiterhin sei angenommen, daß beispielsweise im vorausgegangenen Zeitrahmen der Übertragung die Feststation 1 ermittelt hat, daß bei einer Übertragung auf der Trägerfrequenz f₄ Störungen aufgetreten sind. Diese Störungen können beispielsweise daraus resultieren, daß eine andere Funkübertragungsanordnung diese Trägerfrequenz f₄ beeinträchtigt. Wenn sich nun die Feststation 1 in dem sogenannten Störer-Ausweichmodus befindet, wird sie bei der Wahl der Trägerfrequenz fₓ für den Zeitschlitz Z4 nicht die Trägerfrequenz f₄ wählen, die ja eigentlich durch die vorbestimmte Frequenz vorgeschrieben ist. Die als gestört erfaßte Trägerfrequenz f₄ wird vielmehr übergangen, und eine andere Trägerfrequenz fₓ, beispielsweise die in der vorbestimmten Frequenz folgende Trägerfrequenz fₓ. wird für den Zeitschlitz Z4 gewählt (wie durch den Pfeil P₁ dargestellt). Im in Fig. 4 dargestellten Fall wird also nicht die als gestört erfaßte Trägerfrequenz f₄, sondern die als ungestört erfaßte Trägerfrequenz f₁ für den Zeitschlitz f₄ angewählt.

Auch wenn dieser Störer-Ausweichmodus natürlich große Vorteile beim Funkübertragungsbetrieb mit bereits eingebundenen Mobilteilen 2, 3 aufweist, so ist doch ersichtlich, daß dieser Störer-Ausweichmodus gleichzeitig große Probleme bei der Registrierung eines neuen Mobilteils 11 schafft. Das Mobilteil 11 wird nämlich, ausgehend von dem in ihm gespeicherten Algorithmus und der ihm aus dem Kontrollbereich der von der Feststation her übertragenen Daten bekannten Position der Trägerfrequenz in der vorbestimmten Sequenz entsprechend dem Algorithmus zum Zeitpunkt des Zeitschlitzes Z3 ermitteln, daß ausgehend von dem nächsten Wert der Sequenz zum Zeitpunkt des Zeitschlitzes Z4 eine Übertragung auf der Trägerfrequenz f₄ stattfinden wird. Wenn nun aber aufgrund des Störer-Ausweichmodus die Feststation 1 zum Zeitpunkt des Zeitschlitzes Z4 die Trägerfrequenz f₁ wählt, um die gestörte Trägerfrequenz f₄ zu vermeiden, und gleichzeitig das zu registrierende Mobilteil 11 aufgrund der ihm zugänglichen Informationen zum Zeitpunkt des Zeitschlitzes Z4 die Trägerfrequenz f₄ anwählt, scheitert eine Synchronisierung des Betriebs der Feststation 1 mit dem des Mobilteils 11. Wenn daher durch die Schaltvorrichtung 14 in der Feststation 1 der Registriermodus R gewählt ist, wird gleichzeitig der Störer-Ausweichmodus der Feststation 1 ausgeschaltet. Dies bedeutet, daß im Gegensatz zum Normalmodus, bei dem, wie oben ausgeführt, die Feststation 1 die als gestört erkannte Trägerfrequenz f₄ vermeiden wird, bei einer Stellung der Schaltvorrichtung 14 auf Registriermodus R zum Zeitpunkt des Zeitschlitzes Z4 auf die Trägerfrequenz f₄ wechseln, wie es durch die Sequenz basierend auf dem Algorithmus des Prozessors 15 vorgeschrieben ist, obwohl der Feststation 1 die Trägerfrequenz f₄ als gestört bekannt ist. Der Wechsel der Trägerfrequenz fₓ vom Zeitschlitz Z3 zum Zeitschlitz Z4 ist in Fig. 4 durch den durchlinierten Pfeil P₂ dargestellt. Dadurch, daß bei Stellung der Schaltvorrichtung 14 auf Registriermodus R der Störer-Ausweichmodus der Feststation 1 gleichzeitig ausgeschaltet wird, ist also sichergestellt, daß eine Synchronisierung des Betriebs des Mobilteils 11 mit dem der Feststation 1 erfolgen kann. Nach Beenden der Anmeldeprozedur oder Registrierung des Mobilteils 11 an der Feststation 1 wird dann die Schaltvorrichtung 14 wieder von dem Registriermodus R auf den Normal-Übertragungsmodus N geschaltet, was automatisiert erfolgen kann, und somit kann automatisch der Störer-Ausweichmodus wieder eingeschaltet werden.

Der Störer-Ausweichmodus kann indessen während der Anmeldeprozedur auch eingeschaltet bleiben. Dabei ist zu bedenken, daß gemäß dem Ausführungsbeispiel 96 Trägerfrequenzen vorgesehen sind, von denen maximal 21 gesperrt werden können, um nicht die US-amerikanische Vorschrift "FCC part 15" zu verletzen. Selbst im Störer-Ausweichmodus kennt also das Mobilteil die Mehrzahl der verwendeten Trägerfrequenzen. Wenn somit in einem Rahmen auf Grund einer Frequenzsperrung, die dem Mobilteil nicht bekannt ist, keine Kommunikation zwischen dem Mobilteil und der Feststation zustande kommt, so wird doch aller Wahrscheinlichkeit nach die Kommunikation in dem nächsten Rahmen mit einer neuen Trägerfrequenz wieder aufgenommen werden können.

Gemäß der Erfindung ist also ein Verfahren und eine Vorrichtung zur Sicherstellung der Synchronität während der erstmaligen Registrierung eines neuen Mobilteils an eine Feststation bei einem sogenannten Frequency Hopping Spread Spectrum-System auf Zeitmultiplexbasis vorgesehen.

### Bezugszeichenliste

- 1:: Feststation
- 2:: Mobilteil (kabeiloses Telefon)
- 3:: Mobilteil
- 4:: HF-Modul (in der Feststation)
- 5:: HF-Modul (im Mobilteil)
- 6:: Antenne ( in der Feststation)
- 7:: Antenne (in dem Mabilteil)
- 8:: erster Funkübertragungsweg
- 9:: zweiter Funkübertragungsweg
- 10:: Endstellenieitung
- 11:: Mobilteil
- 12:: Ausgabeeinrichtung (in dem Mobilteil 11)
- 13:: Ausgabeeinrichtung (in der Feststation 1)
- 14:: Schaltvorrichtung
- 15:: Prozessor (in der Feststation)
- 16:: Prozessor (im Mobilteil)
- fₓ:: Trägerfrequenz
- Zx:: Zeitschlitz
- P₁:: Frequenzwechsel (Störer-Ausweichmodus ein)
- P₂:: Frequenzwechsel (Störer-Ausweichmodus aus)

## Patentansprüche

1. Verfahren zur Registrierung eines Mobilteils (11) an einer Feststation (1) für eine Funkübertragung von Daten, bei dem die Daten in Zeitschlitzen (Zx) auf mehreren Trägerfrequenzen (fₓ) übertragen werden and das Mobilteil (11) und die Feststation (1) die Trägerfrequenz (fₓ) nach einer vorbestimmten Zeitdauer gemäß einer vorbestimmten Sequenz wechseln,
**dadurch gekennzeichnet,**
**daß** von der Feststation (1) Kontrolldaten ausgesendet werden, die die Position der Trägerfrequenz (fₓ) des aktuellen Zeitschlitzes (Zx) in der vorbestimmten Sequenz anzeigen, und daß das Mobilteil (11) die Position der Trägerfrequenz (fₓ) des aktuellen Zeitschlitzes (Zx) in der vorbestimmten Sequenz anhand der Kontrolldaten bestimmt (12).

2. Verfahren nach Anspruch 1,
**dadurch gekennzeichnet,**
**daß** die Kontrolldaten während eines Registriermodus automatisch übertragen werden.

3. Verfahren nach einem der vorhergehenden Ansprüche,
**dadurch gekennzeichnet,**
**daß** zur Festlegung des Trägerfrequenzwechsels eine von mehreren vorbestimmten Sequenzen ausgewählt wird und die von der Feststation (1) ausgesendeten Kontrolldaten weiterhin anzeigen, welche der mehreren vorbestimmten Sequenzen von der Feststation (1) verwendet wird.

4. Verfahren nach einem der vorhergehenden Ansprüche,
**dadurch gekennzeichnet,**
**daß** die vorbestimmten Sequenzen durch einen Algorithmus ermittelt (15) werden.

5. Verfahren nach einem der vorhergehenden Ansprüche,
**dadurch gekennzeichnet,**
**daß** erfaßt wird, welche der Trägerfrequenzen (fₓ) gestört ist und während der Registrierung des Mobilteils (11) eine durch die vorbestimmte Sequenz vorgeschriebenen Trägerfrequenz (f₄, Fig.4) verwendet (P₂) wird, wenn diese Trägerfrequenz (f₄, Fig.4) der vorbestimmten Sequenz übergangen (P₁) wird.

6. Verfahren nach einem der vorhergehenden Ansprüche,
**dadurch gekennzeichnet,**
**daß** zur Übertragung das 2,4 GHz-ISM-Frequenzband verwendet wird.

7. Verfahren nach, einem der vorhergehenden Ansprüche,
**dadurch gekennzeichnet,**
**daß** die Zahl der zur Verfügung stehenden Trägerfrequenzen (fₓ) mindestens 75 und insbesondere 96 beträgt.

8. Anordnung zur drahtlosen Übertragung von Daten zwischen einem Mobilteil (2, 3, 11) und einer Feststation (1) in Zeitschlitzen (Zx) auf mehreren Trägerfrequenzen (fₓ), wobei die Feststation (1) und das Mobilteil (11) jeweils
- eine Einrichtung (12, 13) zur Ausgabe einer vorbestimmten Sequenz, die die Trägerfrequenzen (fₓ) der Zeitschlitze (Zx) vorgibt, wobei die Trägerfrequenz nach einer vorbestimmten Zeitdauer wechselt, und
- ein HF-Modul (4, 5) zur Übertragung der Daten in den Zeitschlitzen (Zx), deren Trägerfrequenzen (fₓ) jeweils durch die vorbestimmte Sequenz von der Ausgabeeinrichtung (12, 13) vorgegeben sind, aufweisen,
**dadurch gekennzeichnet,**
**daß** die von der Feststation (1) ausgesendeten Daten Kontrolldaten aufweisen, die die Position der Trägerfrequenz (fₓ) des aktuellen Zeitschlitzes (Zx) in der vorbestimmten Sequenz anzeigen.

9. Anordnung nach Anspruch 8,
**dadurch gekennzeichnet,**
**daß** die Feststation (1) eine Schaltvorrichtung (14) zum Umschalten zwischen einem Registriermodus und einem Normal-Übertragungsmodus aufweist und die Kontrolldaten automatisch ausgesendet werden, wenn die Schaltvorrichtung (14) auf den Registriermodus geschaltet ist.

10. Anordnung nach einem der Ansprüche 8 oder 9,
**dadurch gekennzeichnet,**
**daß** die Ausgabeeinrichtungen (13, 16) jeweils mehrere vorbestimmte Sequenzen aufweist und die Kontrolldaten weiterhin Daten enthalten, die die gerade von der Feststation (1) verwendete Sequenz anzeigen.

11. Anordnung nach einem der Ansprüche 8 bis 10,
**dadurch gekennzeichnet,**
**daß** die Ausgabeeinrichtungen (12, 13) jeweils einen Prozessor (15, 16) aufweisen, der die vorbestimmte(n) Sequenz(en) anhand eines Algorithmus berechnet.

12. Anordnung nach einem der Ansprüche 8 bis 11,
**dadurch gekennzeichnet,**
**daß** die Trägerfrequenzen (fₓ) in einem 2,4 GHz-ISM-Funkband liegen.

## Claims

1. Method for logging on a mobile unit (11) at a fixed station (1) for a transmission of data by radio, in which method the data are transmitted in time slots (Zx) on a plurality of carrier frequencies (fₓ), and the mobile unit (11) and the fixed station (1) change the carrier frequency (fₓ) after a predetermined time period in accordance with a predetermined sequence,
**characterized in that** the fixed station (1) broadcasts check data which indicate the position of the carrier frequency (fₓ) of the current time slot (Zx) in the predetermined sequence, and the mobile unit (11) determines the position of the carrier frequency (fₓ) of the current time slot (Zx) in the predetermined sequence by means of the check data (12).

2. Method according to Claim 1, **characterized in that** the check data are transmitted automatically during a logging-on mode.

3. Method according to one of the preceding claims,
**characterized in that**, in order to define the carrier frequency change, one of a plurality of predetermined sequences is selected and the check data broadcast by the fixed station (1) continue to indicate which of the plurality of predetermined sequences is used by the fixed station (1).

4. Method according to one of the preceding claims,
**characterized in that** the predetermined sequences are determined (15) by means of an algorithm.

5. Method according to one of the preceding claims,
**characterized in that** it is sensed which of the carrier frequencies (fₓ) is subject to interference, and during the logging on of the mobile unit (11) a carrier frequency (f₄, Fig. 4) which is prescribed by the predetermined sequence is used (P₂) if this carrier frequency (f₄, Fig. 4) of the predetermined sequence is passed over (P₁).

6. Method according to one of the preceding claims,
**characterized in that** the 2.4 GHz ISM frequency band is used for transmission.

7. Method according to one of the preceding claims,
**characterized in that** the number of available carrier frequencies (fₓ) is at least 75 and in particular 96.

8. Arrangement for wire-free transmission of data between a mobile unit (2, 3, 11) and a fixed station (1) in time slots (Zx) on a plurality of carrier frequencies (fₓ), the fixed station (1) and the mobile unit (11) each having:
- a device (12, 13) for outputting a predetermined sequence which prescribes the carrier frequencies (fₓ) of the time slots (Zx), the carrier frequency changing after a predetermined time period, and
- an RF module (4, 5) for transmitting the data in the time slots (Zx) whose carrier frequencies (fₓ) are each prescribed by the output device (12, 13) by means of the predetermined sequence,
**characterized in that** the data broadcast by the fixed station (1) have check data which indicate the position of the carrier frequency (fₓ) of the current time slot (Zx) in the predetermined sequence.

9. Arrangement according to Claim 8, **characterized in that** the fixed station (1) has a switching device (14) for switching over between a logging-on mode and a normal transmission mode, and the check data are broadcast automatically if the switching device (14) is switched to the logging-on mode.

10. Arrangement according to one of Claims 8 or 9,
**characterized in that** the output devices (13, 16) each have a plurality of predetermined sequences and the check data continue to contain data which indicate the sequence currently in use by the fixed station (1).

11. Arrangement according to one of Claims 8 to 10,
**characterized in that** the output devices (12, 13) each have a processor (15, 16) which calculates the predetermined sequence or sequences by means of an algorithm.

12. Arrangement according to one of Claims 8 to 11,
**characterized in that** the carrier frequencies (fₓ) lie in a 2.4 GHz ISM radio band.

## Revendications

1. Procédé pour l'enregistrement d'une partie mobile (11) dans une station fixe (1) pour une transmission de données par radio dans laquelle les données sont transmises dans des créneaux temporels (Zx) sur plusieurs fréquences porteuses (fₓ) et la partie mobile (11) et la station fixe (1) changent la fréquence porteuse (fₓ) après une durée prédéterminée selon une séquence prédéterminée,
**caractérisé par le fait que** la station fixe (1) émet des données de contrôle qui indiquent la position de la fréquence porteuse (fₓ) du créneau temporel (Zx) actuel dans la séquence prédéterminée et que la partie mobile (11) détermine (12) à l'aide des données de contrôle la position de la fréquence porteuse (fₓ) du créneau temporel (Zx) actuel dans la séquence prédéterminée.

2. Procédé selon la revendication 1,
**caractérisé par le fait qu'**on transmet automatiquement les données de contrôle pendant un mode d'enregistrement.

3. Procédé selon l'une des revendications précédentes,
**caractérisé par le fait que**, pour fixer le changement de fréquence porteuse, on sélectionne une séquence prédéterminée parmi plusieurs séquences prédéterminées et les données de contrôle émises par la station fixe (1) indiquent aussi celle des séquences prédéterminées qui est utilisée par la station fixe (1).

4. Procédé selon l'une des revendications précédentes,
**caractérisé par le fait qu'**on détermine (15) au moyen d'un algorithme les séquences prédéterminées.

5. Procédé selon l'une des revendications précédentes,
**caractérisé par le fait qu'**on détecte laquelle des fréquences porteuses (fₓ) est perturbée et, pendant l'enregistrement de la partie mobile (11), on utilise (P₂) une fréquence porteuse (f₄, figure 4) prescrite par la séquence prédéterminée lorsque cette fréquence porteuse (f₄, figure 4) de la séquence prédéterminée est omise (P₁).

6. Procédé selon l'une des revendications précédentes,
**caractérisé par le fait qu'**on utilise pour la transmission la bande de fréquence ISM à 2,4 GHz.

7. Procédé selon l'une des revendications précédentes,
**caractérisé par le fait que** le nombre des fréquences porteuses (fₓ) disponibles vaut au moins 75 et notamment 96.

8. Dispositif pour la transmission sans fil de données entre une partie mobile (2, 3, 11) et une station fixe (1) dans des créneaux temporels (Zx) sur plusieurs fréquences porteuses (fₓ), la station fixe (1) et la partie mobile (11) comportant chacune
- un dispositif (12, 13) pour la sortie d'une séquence prédéterminée qui prescrit les fréquences porteuses (fₓ) des créneaux temporels (Zx), la fréquence porteuse changeant après une durée prédéterminée, et
- un module HF (4, 5) pour la transmission des données dans les créneaux temporels (Zx) dont les fréquences porteuses (fₓ) sont prescrites à chaque fois par le dispositif de sortie (12, 13) selon la séquence prédéterminée,
**caractérisé par le fait que** les données émises par la station fixe (1) comportent des données de contrôle qui indiquent la position de la fréquence porteuse (fₓ) du créneau temporel (Zx) actuel dans la séquence prédéterminée.

9. Dispositif selon la revendication 8,
**caractérisé par le fait que** la station fixe (1) comporte un dispositif commutateur (14) pour la commutation entre un mode d'enregistrement et un mode de transmission normale et que les données de contrôle sont transmises automatiquement lorsque le dispositif commutateur (14) est commuté sur le mode d'enregistrement.

10. Dispositif selon l'une des revendications 8 ou 9,
**caractérisé par le fait que** les dispositifs de sortie (13, 16) comportent à chaque fois plusieurs séquences prédéterminées et que les données de contrôle contiennent aussi des données qui indiquent la séquence justement utilisée par la station fixe (1).

11. Dispositif selon l'une des revendications 8 à 10,
**caractérisé par le fait que** les dispositifs de sortie (12, 13) comportent à chaque fois un processeur (15, 16) qui calcule à l'aide d'un algorithme la ou les séquences prédéterminées.

12. Dispositif selon l'une des revendications 8 à 11,
**caractérisé par le fait que** les fréquences porteuses (fₓ) se trouvent dans une bande radio ISM à 2,4 GHz.
